# EUROPÄISCHE PATENTANMELDUNG

(11) **EP 3 840 153 A1**
(43) Veröffentlichungstag der Anmeldung: **23.06.2021**
(21) Anmeldenummer: 20215118.9
(22) Anmeldetag: 17.12.2020
(51) Int. Cl.: H02G 3/12, H02G 3/08

(54) **HALTERUNG**

(30) Priorität: 20.12.2019 DE 102019135642
(71) Anmelder: Kaiser GmbH & Co. KG, 58579 Schalksmühle (DE)
(72) Erfinder: SIEBEKING, Thomas, 58513 Lüdensche (DE)
(74) Vertreter: Rentsch Partner AG

(57) **Zusammenfassung**

Der Erfindung bezieht sich auf eine Halterung (1) für eine Installationsdose (2) in einer Wandöffnung (4) umfassend ein ringartiges Halteelement (6), welches einen Aufnahmeraum (7) zum Aufnehmen der Installationsdose (2) umgibt und mindestens zwei Haltearme (8), welche von dem ringartigen Halteelement (6) abstehen. An den jeweiligen Aussenseiten (9) der Haltearme (8) sind Verankerungselement (11) angeordnet, welche in einem montierten Zustand die Halterung (1) in der Wandöffnung (4) fixiert. Weiterhin ist mindestens ein Anschlagelement (12) zum Anschlag der Halterung (1) an einer die Wandöffnung (4) umgebende Wandoberfläche (5) vorhanden.

## Beschreibung

Die Erfindung betrifft eine Halterung für eine Installationsdose, insbesondere eine Unterputzdose, für elektrotechnische Installationen.

Halterungen für Installationsdosen sind aus dem Stand der Technik bekannt. Beispielsweise offenbart die EP2028740 derselben Anmelderin eine Halterung, welche mit einem ringartigen Halteelement vom Dosenboden her auf eine Installationsdose aufschiebbar ist und welche mindestens zwei vom Halteelement axial abragende Haltearme aufweist. An dem ringartigen Halteteil sind mehrere Verankerungselemente angeordnet, welche die Halterung in einer Wandöffnung fixieren. Nach der Montage kann die in die Wandöffnung eingesetzte Installationsdose verputzt werden.

Nachteilig bei den aus dem Stand der Technik bekannten Halterungen ist, dass diese nur besonders gut in homogenen Steinwänden (z.B. Kalksandstein, Porenbeton oder Ziegelstein) funktionieren. Sobald Steine mit inhomogenen Strukturen (z.B. Leichtbeton oder Hochlochziegel) verwendet werden, kann die Halterung verrutschen und eine verlässliche Fixierung der Installationsdose kann nicht mehr gewährleistet werden.

Es ist eine Aufgabe der Erfindung eine Halterung bereitzustellen, welche für den universalen Einbau in Wänden unterschiedlicher Beschaffenheit geeignet ist. Es ist eine weitere Aufgabe der Erfindung eine Halterung bereitzustellen, welche die Deformation der Installationsdose beim Einbau mit der Halterung in einer Wandöffnung verringert.

Eine Halterung gemäss der Erfindung für eine Installationsdose in einer Wandöffnung umfasst ein ringartiges Halteelement und mindestens zwei von diesem abgehende Haltearme. Das ringartige Halteelement umgibt hierbei einen Aufnahmeraum zum Aufnehmen der Installationsdose und dient dazu die Installationsdose zu umgreifen und in der Halterung festzuklemmen. Das ringartige Halteelement erstreckt sich um eine Einbauachse für die Installationsdose. Die Installationsdose kann rund als auch eckig ausgestaltet sein und ringartig von der Halterung umgeben sein. D.h. ein Querschnitt des Aufnahmeraums und/oder einer Innenkontur des ringartigen Halteelementes kann in Richtung der Einbauachse des ringartigen Halteelementes rund und/oder eckig ausgestaltet sein. Die Installationsdose erstreckt sich hierbei in einem montierten Zustand in die Richtung der Einbauachse (axiale Richtung) der Halterung, bzw. des ringartigen Halteelementes. Die mindestens zwei Haltearme ragen von dem ringartigen Halteelement ab und erstrecken sich in eine Längsrichtung des jeweiligen Haltearms. An einer Aussenseite der jeweiligen Haltearme kann mindestens ein Verankerungselement angeordnet sein. Mit Vorteil weisen die Haltearme jedoch mehrere entlang der Längsrichtung der Haltearme verteilt angeordnete Verankerungselemente auf. In einem montierten Zustand der Halterung in der Wandöffnung fixieren die Verankerungselemente die Halterung in der Wand und somit die Installationsdose in der Wandöffnung. Eine solche Anordnung verbessert die Verankerung der Halterung in inhomogenen Wänden. Die Aussenseite der Haltearme ist hierbei diejenige Seite, welche im montierten Zustand von dem Aufnahmeraum weggewandt ist und zu der Wand hingewandt ist. Der Aussenseite gegenüberliegend ist die Innenseite des jeweiligen Haltearms.

Je nach Ausgestaltung können die mindestens zwei Haltearme diametral gegenüber an dem ringartigen Halteelement angeordnet sein. Auch eine andere Anzahl von Haltearmen ist denkbar. Beispielsweise können auch vier Haltearme vorgesehen sein. Für einen einfachen Einbau und Herstellung der Halterung kann es vorteilhaft sein, wenn zwischen dem ringartigen Halteelement und den jeweiligen Haltearmen ein Gelenk angeordnet ist. Das Gelenk kann beispielsweise eine Materialverdünnung an einem proximalen Ende des Haltearms sein. Das Gelenk ermöglicht, dass die Haltearme von einer ersten in eine zweite Position verstellbar sind. In der zweiten Position stehen die Haltearme mit Vorteil im Wesentlichen normal zu der Ebene, welche das ringartige Halteelement aufspannt, d.h. die Haltearme erstrecken sich im Wesentlichen in die axiale Richtung. In der ersten Position können die Haltearme ausgeklappt sein und beispielsweise im Wesentlichen parallel zur Ebene, welche das ringartige Halteelement aufspannt, angeordnet sein. In dieser Position ist die Installationsdose leicht in der Halterung zu montieren. Weiterhin kann die Halterung in dieser Position einfach hergestellt werden, wie z.B. durch Spritzguss. Je nach Anwendung kann die Halterung daher einen Kunststoff, insbesondere einen Spritzgusskunststoff, umfassen.

Um die Position der Installationsdose in der Wandöffnung sicherstellen zu können, umfasst die Halterung weiterhin mindestens ein Anschlagelement, welches als (Tiefen-) Anschlag für die Halterung an einerdie Wandöffnung umgebende Wandoberfläche dient. Das mindestens eine Anschlagelement steht mit Vorteil winklig von der Aussenseite eines Haltearms ab. Mit Vorzug ist pro Haltearm mindestens ein Anschlagelement an dem distalen Ende des Haltearms angeordnet, d.h. die Halterung umfasst mindestens zwei Anschlagelemente. Die mindestens zwei Haltearme können weiterhin jeweils y-förmig ausgestaltet sein, sodass pro Haltearm zwei distale, von dem Halteelement weggewandte Enden des Haltearms ausgebildet werden. Dies hat den Vorteil, dass bei der Verwendung von nur zwei Haltearmen dennoch insgesamt vier Auflagepunkte, respektive Anschlagelemente, vorhanden sein können. Dies wirkt sich vorteilhaft auf die korrekte Ausrichtung der Installationsdose auf.

Je nach Ausgestaltung können an den jeweiligen Haltearmen und in dessen Längsrichtung verteilt mehrere Verankerungselemente angeordnet sein. Dies ist besonders vorteilhaft, wenn die Halterung in inhomogenen Steinwänden angeordnet ist. Je nach Breite des Haltearmes können ergänzend an der gleichen Position in Längsrichtung des Haltearmes mehrere Verankerungselemente nebeneinander angeordnet sein. Mit Vorteil ist das eine oder sind die mehreren Verankerungselemente derart ausgestaltet, dass die Kraft zum Einstecken der Halterung (mit montierter Installationsdose) in die Wandöffnung geringer ist als die Kraft zum Entnehmen der Halterung aus der Wandöffnung. Die Kraft, welche die Halterung, respektive die Installationsdose, in der Wandöffnung hält, ist ausreichend groß, um die normalen Auszugkräfte beim Einsatz einer Steckdose in der Installationsdose zu gewährleisten. Kommt zudem Putz auf die Wand, der auch in dem Ringspalt zwischen der Wandöffnung und einer Aussenwand der Installationsdose eindringt, erhöht sich die Haltekraft weiter. Eine genügend grosse Haltekraft kann erreicht werden, wenn die Verankerungselemente in dem montierten Zustand einen Widerhaken in der Wand in die axiale Richtung ausbilden. Die Verankerungselemente sind hierfür im montierten Zustand der Halterung in Richtung der Wandoberfläche, respektive in Richtung der jeweiligen distalen Enden der Haltearme, geneigt.

Je nach Anwendung kann das mindestens eine Verankerungselement oder können die mehreren Verankerungselemente lamellenartig ausgebildet sein. Alternativ oder ergänzend können die Verankerungselemente ebenfalls keilförmig und/oder mit mindestens einem Sägezahn ausgebildet sein. Weiterhin können die Verankerungselemente je einen Verformungsbereich umfassen, in welchem dieses plastisch und/oder elastisch deformierbar ist. Der Verformungsbereich ist mit Vorteil an der Basis des Verankerungselementes angeordnet. Die Basis ist das Ende des Verankerungselementes an welchem dieses mit dem Rest der Halterung verbunden ist, respektive angeformt ist. Um die kontrollierte Deformation der Verankerungselemente beim Einbau zu begünstigen, können die Verankerungselemente an ihrer Basis auf der von dem distalen Ende der Haltearme weggewandten Seite einen grösseren Übergangsradius zur Aussenseite des Haltearms aufweisen als auf der zu der dem distalen Ende der Haltearme hingewandten Seite. In einem undeformierten Zustand können die lamellenartigen Verankerungselemente im Wesentlichen senkrecht von der Aussenseite der Haltearme abstehen. Jedoch sind auch winkelige Anordnungen denkbar. Beim Einbau der Halterung, respektive der Installationsdose, in der Wandöffnung verformen sich die Verankerungselemente und neigen sich in Richtung der Wandoberfläche, sodass ein Widerhaken (gegen die Wandöffnung) gebildet wird.

Je nach Ausgestaltung kann mindesten ein weiteres Verankerungselement an dem ringartigen Halteelement angeordnet sein. Dieses Verankerungselement kann ebenfalls einen Verformungsbereich, insbesondere an einer Basis des mindestens einen Verankerungselementes, bei welchem das mindestens ein Verankerungselement in das ringartige Halteelement übergeht, aufweisen. Mit Vorteil erstrecken sich die Verankerungselemente je über 10° bis 30° (grad), insbesondere über 15° - 25° (grad), in Bezug auf den Umfang des ringartigen Halteelements. Für eine gute Befestigung der Halterung in der Wand ist es von Vorteil, wenn sämtliche Verankerungselemente der Halterung (angeordnet an den Haltearmen und dem Halteelement) in radialer Richtung auf eine äussere Verankerungskontur begrenzt sind (wenn die Haltearme in axiale Richtung zeigen). Die äussere Verankerungskontur hat in der axialen Richtung mit Vorteil (zumindest annähernd) eine Kreisform. Die Kreisform weist mit Vorteil einen grösseren Durchmesser als die ebenfalls im Wesentlichen kreisförmige Wandöffnung auf. Die Anschlagelemente erstrecken sich mit Vorteil in radialer Richtung über die äussere Verankerungskontur.

Um eine ungewünschte Deformation der Installationsdose zu verringern ist es von Vorteil, wenn die Kraft auf die Installationsdose primär über das ringartige Halteelement auf die Installationsdose übertragen wird. Hierfür kann an den jeweiligen Haltearmen an der Innenseite mindestens ein erstes Abstützelement vorhanden sein, welches im montierten Zustand den jeweiligen Haltearm an dem ringartigen Halteelement abstützt. Für eine gute Krafteinleitung erstreckt sich das erste Abstützelement vorteilhafterweise in Längsrichtung zumindest teilweise entlang des Haltearms. Mit Vorteil stützt sich im montierten Zustand der Halterung der entsprechende Haltearm über eine Schulter des mindestens einen ersten Abstützelementes in axialer Richtung an dem ringartigen Halteelement ab. Die Schulter ist mit Vorteil an dem proximalen Ende des jeweiligen Haltearms angeordnet. Die Schulter des ersten Abstützelements kann z.B. neben dem Gelenk angeordnet sein. Durch die Bewegung der jeweiligen Haltearme von einer ersten in eine zweite Position kann die Schulter so in Kontakt mit dem ringartigen Halteelement treten. D.h. die Schulter ist mit Vorteil nur in der zweiten Position, insbesondere wenn die Haltearme in Richtung der Einbauachse sehen, in Kontakt mit dem ringartigen Haltelement. Je nach Ausgestaltung können pro Haltearm auch mehrere erste Abstützelemente vorhanden sein. Diese erstrecken sich mit Vorteil in Längsrichtung der Haltearme nebeneinander. Für eine gute Kraftübertragung können die ersten Abstützelemente angeordnet auf der Innenseite eines Haltearms gegenüberliegend den Verankerungselementen auf der Aussenseite des entsprechenden Haltearms angeordnet sein. Beispielsweise können auf der Aussenseite zwei Reihen an Verankerungselementen in Längsrichtung nebeneinander angeordnet sein, welche ihre entsprechend aufgebrachte Kraft über je ein erstes Abstützelement an das Halteelement übertragen. Hierzu kann es von Vorteil sein, wenn das mindestens eine sich die Längsrichtung erstreckende erste Abstützelement mittig zu einer mindestens einen (in Längsrichtung untereinander orientierten) Reihe von Verankerungselementen angeordnet ist.

Je nach Ausgestaltung können die Haltearme an ihrer Innenseite mindestens ein zweites Abstützelement zum Abstützen des jeweiligen Haltearms an der Aussenwand der Installationsdose aufweisen. Die zweiten Abstützelemente dienen u.a. dazu Deformationen der Installationsdose zu verringern. Die zweiten Abstützelemente können dünnwandig ausgestaltet sein. Die zweiten Abstützelemente können weiter winkelig von der Innenseite der Haltearme abstehen. Mit Vorteil sind die zweiten Abstützelemente an einem distalen Ende der Haltearme angeordnet. Die zweiten Abstützelemente können den Anschlagelementen gegenüberliegen. Alternativ oder ergänzend können die zweiten Abstützelemente und/oder weitere zweite Abstützelemente auch an anderen Positionen in Längsrichtung der jeweiligen Haltearme angeordnet sein. Mit Vorteil sind pro Haltearm an der Innenseite zwei zueinander beabstandete zweite Abstützelemente angeordnet. Bei einer y-förmigen Ausgestaltung der Haltearme, wie oben beschrieben, kann an den jeweiligen beiden distalen Enden eines Haltearms ein zweites Abstützelement angeordnet sein. Zwei zueinander beabstandete zweite Abstützelemente pro Haltearm haben den Vorteil, dass diese den jeweiligen Haltearm an unterschiedlichen umfangseitigen Positionen der Installationsdose abstützen können. D.h. mit Vorteil sind die zweiten Abstützelemente in Längsrichtung der Haltearme auf der gleichen Position, jedoch (im eingebauten Zustand) in der zu der Einbauachse senkrechten Ebene voneinander beabstandet angeordnet. Mit Vorteil erstrecken sich die Abstützelemente hierbei in Längsrichtung der jeweiligen Haltearme. Auf diese Weise stehen die jeweiligen zweiten Abstützelemente in Hinsicht auf den Umfang der Installationsdose nur punktuell mit dieser in Kontakt und erlauben gleichzeitig eine zusätzliche Stabilisierung und Ausrichtung der Installationsdose in der Halterung. Der Abstand zur Einbauachse der beiden zweiten Abstützelemente sollte jedoch mit Vorzug gleich gross sein, wenn die Installationsdose im Wesentlichen rund ausgestaltet ist. Die jeweiligen zweiten Abstützelemente angeordnet an der Innenseite der Haltearme können den an der Aussenseite der Haltearme angeordneten Anschlagelementen gegenüberliegen.

Um ein Rausrutschen der Installationsdose aus der Halterung zu erschweren, kann die Halterung ein Rastmittel umfassen. Dieses kann mit mindestens einem korrespondierenden Rastmittel der Installationsdose zusammenwirken. Beispielsweise kann die Installationsdose eine Rastnase an der Aussenseite aufweisen, welche in eine Rastnut, angeordnet an einer Innenseite des ringartigen Halteelementes, einrastet (oder vice versa). Alternativ oder ergänzend kann mindestens ein Vorsprung an der Aussenwand der Installationsdose mit mindestens einem Teil des ringartigen Halteelementes einen Hinterschnitt in axialer Richtung bilden, sodass ein Rausrutschen der montierten Installationsdose aus der Wandöffnung erschwert wird.

Je nach Anwendung, bzw. Ausgestaltung der Installationsdose kann das ringartige Halteelement mindestens einen bügelförmigen Abschnitt umfassen. Mit Vorteil umfasst die Halterung zwei diametral gegenüberliegende bügelförmige Abschnitte. Diese können jeweils zwischen den beiden Haltearmen angeordnet sein. Der mindestens eine bügelförmige Abschnitt erlaubt es, ein auf Höhe des Halteelementes angeordnetes, radial abstehendes Element auf der Installationsdose zu umgehen, bzw. nicht in seiner Funktion einzuschränken. Ein solches Element kann z.B. ein Anschlussstutzen zum Anschliessen der Installationsdose an einer weiteren Installationsdose oder zum Anschliessen eines Rohres an der Installationsdose sein. Auch andere Elemente sind denkbar. Somit kann der bügelförmige Abschnitt z.B. einen Anschlussstutzen umgehen, welches ansonsten von dem ringartigen Halteelement blockiert würde. Auf diese Weise kann die Installationsdose trotz Halterung einfach angeschlossen und montiert werden. Der bügelförmige Abschnitt kann hierbei zumindest teilweise einer Kontur des radial abstehenden Elementes der Installationsdose folgen. Für eine einfache Montage ist es vorteilhaft, wenn der bügelförmige Abschnitt in einem montierten Zustand der Halterung in der Wandöffnung von den Haltearmen weggebogen ist. In diesem Fall liegt der bügelförmigen Abschnitt auf einer von der Wandoberfläche weggewandten Seite des radial abstehenden Elementes an.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine Variante einer erfindungsgemässen Halterung für eine Installationsdose in einer ersten Position vor dem Einbau in einer perspektivischen Ansicht;
- Fig. 2: Die Halterung gemäss Figur 1 in einer zweiten Position vor dem Einbau in einer perspektivischen Ansicht;
- Fig. 3: Die Halterung gemäss Figur 1 in einer zweiten Position vor dem Einbau in einer Ansicht von oben;
- Fig. 4: Die Halterung gemäss Figur 1 in einer zweiten Position vor dem Einbau mit einer Installationsdose 2 in einer perspektivischen Ansicht;
- Fig. 5: Die Halterung gemäss Figur 1 in einer zweiten Position in einem montierten Zustand in einer Wand und mit einer Installationsdose in einer Ansicht von der Seite;

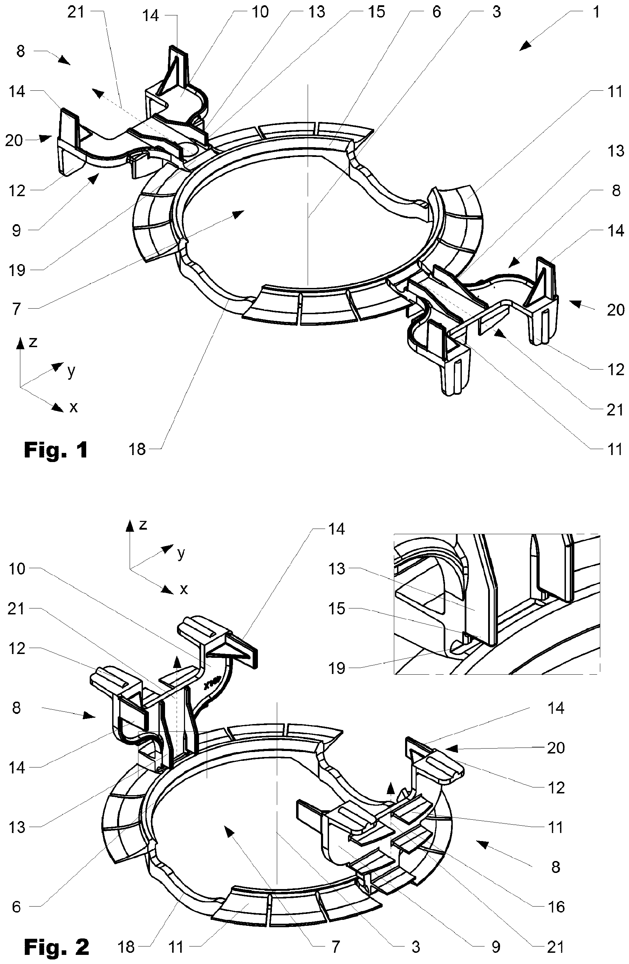

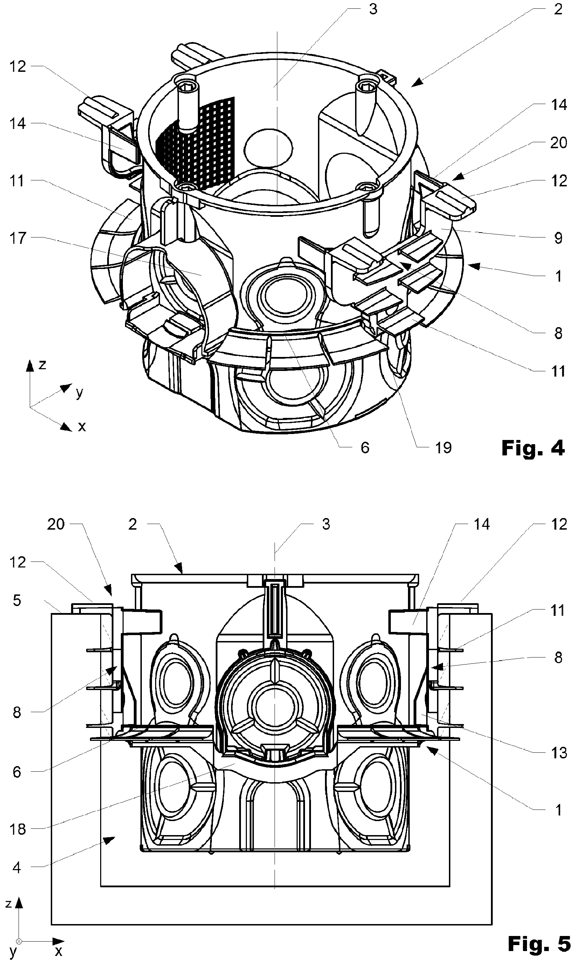

**Figur 1** bis **Figur 5** zeigen eine Variante einer erfindungsgemässen Halterung 1 für eine Installationsdose 2. **Figur 1** bis **Figur 3** zeigen die Halterung 1 ohne Installationsdose 2, während **Figur 4** die Halterung 1 mit Installationsdose 2 zeigt. **Figur 5** illustriert den montierten Zustand der Halterung 1 und der Installationsdose 2 in einer Wandöffnung 4.

Die erfindungsgemässe Halterung 1 umfasst ein ringartiges Halteelement 6, welches einen Aufnahmeraum 7 für die Installationsdose 2 umgibt. Von dem ringartigen Halteelement 6 stehen mindestens zwei Haltearme 8 ab. Diese sind mit Vorteil über ein Gelenk 19 mit dem ringartigen Halteelement 6 verbunden und können von einer ersten Position in eine zweite Position gebracht werden. In der zweiten Position, in welcher die Halterung in eine Wandöffnung 4 eingebaut werden kann, stehen die Haltearme 8 in die axiale Richtung (z Richtung / Richtung der Einbauachse 3 des ringartigen Halteelementes 6) ab (siehe **Figur 2 - 5**). An einer Aussenseite 9 der Haltearme 8 (in der zweiten Position von der Einbauachse 3 wegweisende Seite der Haltearme 8) sowie am ringartigen Halteelement 6 sind multiple lamellenartige Verankerungselemente 11 angebracht. Die Verankerungselemente 11 der Haltearme 8 sind in Längsrichtung 21 über die Haltearme 8 verteilt angeordnet. An den distalen Enden 20 der Haltearme 8 sind weiterhin je ein Anschlagelement 12 angeordnet, welche im montierten Zustand der Halterung 1 an der die Wandöffnung 4 umgebende Wandoberfläche 5 anliegen. Die Anschlagelemente 12 definieren so die Tiefe der montierten Installationsdose 2 in der Wandöffnung 4.

Das ringartige Halteelement 6 weist zwei gegenüberliegende bügelförmigen Abschnitte 18 auf, welche je zumindest teilweise einen von der Installationsdose 2 radial abstehenden Anschlussstutzen 17 umgeben. Im gezeigten Fall ist der bügelförmige Abschnitt 18 in einem montierten Zustand der Halterung 1 in der Wandöffnung 4 von den Haltearmen 8 weggebogen. Diese Ausgestaltung verhindert u.a., dass das ringartige Halteelement 6 den Anschlussstutzen 17 blockiert und erlaubt, dass die Installationsdose 2 trotz Halterung 1 über diesen einfach angeschlossen und montiert werden kann.

An einer Innenseite 10 der Haltearme 8 sind erste und zweite Abstützelemente 13, 14 angeordnet. Die ersten Abstützelemente 13 stützen im montierten Zustand die jeweiligen Haltearme 8 an dem ringartigen Halteelement 6 ab. Die ersten Abstützelemente 13 erstrecken sich in die Längsrichtung 21 der Haltearme 8 entlang eines Haltearms 8 und weisen an einem dem Halteelement 6 hingewandten Ende eine Schulter 15 auf. Die Schulter 15 ist mit Vorteil neben dem Gelenk 19 angeordnet. Im montierten Zustand der Halterung 1 stützt sich der entsprechende Haltearm 8 über diese Schulter 15 in axialer Richtung an dem ringartigen Halteelement 6 ab (vgl. Detailabbildung von **Figur 2**). Im gezeigten Beispiel sind pro Haltearm 8 zwei erste Abstützelemente 13 vorhanden. Diese erstrecken sich in Längsrichtung 21 nebeneinander entlang des Haltearms 8. Die ersten Abstützelemente 13 angeordnet auf der Innenseite 10 eines Haltearms 8 sind hierbei je gegenüberliegend einer Reihe von Verankerungselementen 11 auf der Aussenseite 9 des entsprechenden Haltearms 8 angeordnet.

Die zweiten Abstützelemente 14 sind am distalen Ende 20 der Haltearme 8 angeordnet. Die zweiten Abstützelemente 14 liegen mit Vorteil den Anschlagelementen 12 gegenüber. Im gezeigten Fall sind die Haltearme 8 y-förmig ausgestaltet und ein Haltearm 8 weist zwei distale Enden 20 auf, welche vom Halteelement 6 weggewandt angeordnet sind. An den jeweiligen distalen Enden 20 eines Haltearms 8 sind je zweite Abstützelemente 14 angeordnet. Somit stützt sich die Halterung 8 (neben dem Halteelement 6) an insgesamt vier Punkten über dem Umfang verteilt an der Installationsdose 2 ab.

Um ein Rausrutschen der Installationsdose 2 aus der Halterung 1 zu erschweren, kann die Halterung 1 ein Rastmittel umfassen, welches mit einem korrespondierenden Rastmittel der Installationsdose 2 zusammenwirkt. Im gezeigten Beispiel umfasst die Installationsdose 2 mehrere um den Umfang verteilte Vorsprünge (nicht sichtbar) welche mit dem ringartigen Halteelement 6 einen Hinterschnitt in der axialen Richtung bildet, sodass ein Rausrutschen der Installationsdose 2 aus der Halterung 1 in Richtung des distalen Endes 20 der Haltearme 8 erschwert wird.

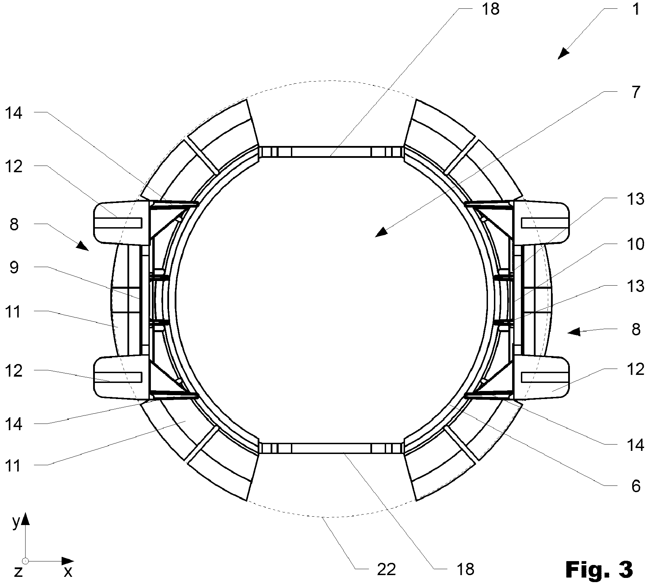

**Figur 3** zeigt die Halterung (in der zweiten Position) in einer Ansicht von oben. In dieser Ansicht ist erkennbar, dass die Verankerungselemente 11 über den Umfang des Halteelementes 6 verteilt angeordnet sind, mit Ausnahme des Bereiches der bügelförmigen Abschnitte 18. DiejeweiligenVerankerungselemente 11 erstrecken sich hierbei über 10° bis 30° (grad), insbesondere über 15° - 25° (grad), in Bezug auf den Umfang des ringartigen Halteelements 6. Weiterhin erkennbar ist, dass sämtliche Verankerungselemente 11 der Halterung 1 in radialer Richtung auf eine äussere Verankerungskontur 22 begrenzt sind. Die äussere Verankerungskontur 22 hat in der axialen Richtung mit Vorteil zumindest annähernd eine Kreisform. Die Anschlagelemente 12 erstrecken sich in radialer Richtung über die äussere Verankerungskontur 22.

**Figur 4** zeigt eine Installationsdose 2 in der Halterung 1 und **Figur 5** zeigt den montierten Zustand der Halterung 1 in einer Wandöffnung 4 mit einer in dem Aufnahmeraum 7 angeordneten Installationsdose 2. Es ist ersichtlich, dass die Verankerungselemente 11, angeordnet auf den Haltearmen 8 sowie auf dem ringartigen Halteelement 6, mit der Wandöffnung 4 umfangseitig in Kontakt stehen. Beim Einbau werden die Verankerungselemente 11 hierbei deformiert, sodass diese in einem deformierten Zustand (hier gestrichelt dargestellt) in Richtung der Wandoberfläche 5 angelegt werden und einen Widerhaken in der Wandöffnung 4 bilden. Die Deformation kann plastisch und/oder elastisch sein. Mit Vorteil findet die Deformation jedoch in einem Verformungsbereich 16 an einer Basis des jeweiligen Verankerungselementes 11 statt.

**LISTE DER BEZUGSZEICHEN**

| | | | |
|---|---|---|---|
| 1 | Halterung | 12 | Anschlagelement |
| 2 | Installationsdose | 13 | Erstes Abstützelement |
| 3 | Einbauachse | 14 | Zweites Abstützelement |
| 4 | Wandöffnung | 15 | Schulter |
| 5 | Wandoberfläche | 16 | Verformungsbereich |
| 6 | Halteelement | 17 | Anschlussstutzen |
| 7 | Aufnahmeraum | 18 | Bügelförmigen Abschnitt |
| 8 | Haltearme | 19 | Gelenk |
| 9 | Aussenseite | 20 | Distales Ende |
| 10 | Innenseite | 21 | Längsrichtung |
| 11 | Verankerungselement | 22 | Verankerungskontur |

## Patentansprüche

1. Halterung (1) für eine Installationsdose (2) in einer Wandöffnung (4) umfassend
a. ein ringartiges Halteelement (6), welches einen Aufnahmeraum (7) zum Aufnehmen der Installationsdose (2) umgibt,
b. mindestens zwei Haltearme (8), welche von dem ringartigen Halteelement (6) abstehen,
c. mindestens ein jeweils an einer Aussenseite (9) der Haltearme (8) angeordnetes Verankerungselement (11), welches in einem montierten Zustand die Halterung (1) in der Wandöffnung (4) fixiert,
d. mindestens ein Anschlagelement (12), zum Anschlag der Halterung (1) an einer die Wandöffnung (4) umgebende Wandoberfläche (5).

2. Halterung (1) gemäss Patentanspruch 1, **dadurch gekennzeichnet, dass** das mindestens eine Verankerungselement (11) lamellenartig ausgestaltet ist.

3. Halterung (1) gemäss einem der vorangehenden Patentansprüche, **dadurch gekennzeichnet, dass** das mindestens eine Verankerungselement (11) einen Verformungsbereich (16) umfasst, in welchem dieses plastisch und/oder elastisch deformierbar ist.

4. Halterung (1) gemäss einem der vorangehenden Patentansprüche, **dadurch gekennzeichnet, dass** die Haltearme (8) an ihrer Innenseite (10) je mindestens ein erstes Abstützelement (13) aufweisen, welches zum Abstützen der Haltearme (8) an dem ringartigen Halteelement (6) in dem montierten Zustand dient.

5. Halterung (1) gemäss Patentanspruch 4, **dadurch gekennzeichnet, dass** das mindestens eine erste Abstützelement (13) eine Schulter (15) umfasst, welche im montierten Zustand auf dem ringartigen Halteelement (6) aufliegt.

6. Halterung (1) gemäss einem der vorangehenden Patentansprüche, **dadurch gekennzeichnet, dass** die Haltearme (8) an ihrer Innenseite (10) jeweils mindestens ein zweites Abstützelement (14) zum Abstützen des jeweiligen Haltearms (8) an der Installationsdose (2) aufweisen.

7. Halterung (1) gemäss Patentanspruch 6, **dadurch gekennzeichnet, dass** die jeweiligen Haltearme (8) an ihrer Innenseite (10) zwei zueinander beabstandete zweite Abstützelemente (14) aufweisen, sodass diese den jeweiligen Haltearm (8) an unterschiedlichen umfangseitigen Positionen der Installationsdose (2) abstützen.

8. Halterung (1) gemäss einem der vorangehenden Patentansprüche, **dadurch gekennzeichnet, dass** zwischen dem ringartigen Halteelement (6) und den jeweiligen Haltearmen (8) ein Gelenk (19) angeordnet ist.

9. Halterung (1) gemäss einem der vorangehenden Patentansprüche, **dadurch gekennzeichnet, dass** die Haltearme (8) diametral gegenüber an dem ringartigen Halteelement (6) angeordnet sind.

10. Halterung (1) gemäss einem der vorangehenden Patentansprüche, **dadurch gekennzeichnet, dass** die Haltearme (8) an ihrem vom Halteelement (6) weggewandten, distalen Enden (20) je ein Anschlagelement (12) aufweisen.

11. Halterung (1) gemäss einem der vorangehenden Patentansprüche, **dadurch gekennzeichnet, dass** die Haltearme (8) je y-förmig ausgestaltet sind und je zwei distale Enden (20) aufweisen.

12. Halterung (1) gemäss Patentanspruch 6 und 11, **dadurch gekennzeichnet, dass** die jeweiligen zweiten Abstützelemente (14) angeordnet an der Innenseite (10) der Haltearme (8) den an der Aussenseite (9) der Haltearme (8) angeordneten Anschlagelementen (12) gegenüberliegen.

13. Halterung (1) gemäss einem der vorangehenden Patentansprüche, **dadurch gekennzeichnet, dass** das ringartige Halteelement (6) mindestens einen bügelförmigen Abschnitt (18) umfasst, welcher in einem montierten Zustand der Halterung (1) an einer Installationsdose (2) einen Anschlussstutzen (17) zumindest teilweise umgibt.

14. Halterung (1) gemäss einem der vorangehenden Patentansprüche, **dadurch gekennzeichnet, dass** umfangseitig um das ringartige Halteelement (6) mehrere Verankerungselemente (11) angeordnet sind.

15. Halterung (1) gemäss einem der vorangehenden Patentansprüche, **dadurch gekennzeichnet, dass** die Halterung (1) einen Kunststoff, insbesondere einen Spritzgusskunststoff, umfasst.

16. Installationsdose (2) mit einer Halterung (1) gemäss einem der vorangehenden Patentansprüche.
